# EUROPEAN PATENT SPECIFICATION

(11) **EP 1 076 848 B1**
(45) Date of publication and mention of the grant of the patent: **17.07.2002**
(21) Application number: 98920679.2
(22) Date of filing: 13.05.1998
(51) Int. Cl.: G06F 9/44

(54) **REMOTE INSTALLATION OF COMPUTER OPERATING SYSTEMS**
FERNINSTALLATION VON COMPUTERBETRIEBSSYSTEMEN
INSTALLATION A DISTANCE DE SYSTEMES D'EXPLOITATION INFORMATIQUES

(43) Date of publication of application: 21.02.2001
(73) Proprietor: GLAXO GROUP LIMITED, Greenford, Middlesex UB6 0NN (GB)
(72) Inventor: PLATT, Daniel, James, Apex, NC 27502 (US); PATTERSON, Andrew David, Barrow-in-Furness, Cumbria LA13 0UB (GB); POWELL, Thomas, Dwayne, Burlington, NC 27215 (US); COOK, Neil Rae, Uxbridge, Middlesex, UB11 1BT (GB)
(74) Representative: Exell, Jonathan Mark
(86) International application number: GB9801356
(87) International publication number: WO9959059

(56) References cited:
- GB-A- 2 231 180
- US-A- 5 280 627
- "REMOTE SOFTWARE INSTALLATION PROTOCOL" IBM TECHNICAL DISCLOSURE BULLETIN, vol. 34, no. 10A, 1 March 1992, pages 82-84, XP000302233
- PATENT ABSTRACTS OF JAPAN vol. 018, no. 189 (P-1721), 31 March 1994 & JP 05 346896 A (HITACHI LTD), 27 December 1993

## Description

### Field of the Invention

The present invention relates to the remote installation of computer operating systems for networked computers.

### Background to the Invention

It has become common in business organisations to connect computers together by cabling in a network so that resources such as printers and files may be shared and also to permit the use of facilities such as electronic mail, the Internet and company intranets. Such networks may be in the form of a local area network (LAN) where computer workstations in a single physical location, for example a building, are connected to each other and to a computer acting as a network server. The network server typically controls security access to the network and regulates resource sharing. There may be more than one network server on a LAN, for example each floor of the building may have its own dedicated server.

With the advent of cheap, high capacity, telecommunications it has become possible to connect individual LANs together to form wide area networks (WANs). This interconnection permits large scale resource sharing and is the basis of the Internet. Large organisations use such technology to form their own intranets allowing secure organisation-wide e-mail and file sharing.

In large LANs or WANs, with hundreds or even thousands of computer workstations and many servers, administration or management of the individual computer workstations can be a cumbersome task. Manual installation of each computer workstation is a labourious and time consuming task, often taking several hours to complete. During the installation and configuration of a computer operating system, the installer must select the configuration and the software components to be installed that conforms to the machine, the organisation-wide policy, the LAN requirements and the end user requirements. This can mean that the configuration of computers across WANs will vary significantly and even the configuration of computers across the same LAN may be different. Each system administrator must be familiar with each differing configuration on any LAN or WAN they are expected to support as each configuration may raise its own support issues and possible conflicts with policy. In response to this, many organisations now have organisation-wide policies which define the software and hardware configuration of each computer workstation in an attempt to produce standardised configurations and thereby ease these support problems.

It is now possible to install computer operating systems from a data store on a network to a particular computer workstation. This can be achieved using pre-written scripts setting installation and configuration options to facilitate automatic installation. However, these scripts can generally only be used for the standardized installation of an operating system from a LAN with a single server.

The document GB-A-2231180 discloses such a networked installation procedure. A terminal is attached to an existing computer network that includes a server holding an operating system source. The terminal is run using a minimal operating system in its memory that connects the terminal to the server and downloads the operating system source to a partition in a storage device of the terminal.

### Summary of the Invention

According to a first aspect of the present invention, there is provided a method of installing a computer operating system, comprising the steps of running an installation routine on a computer in which the installation routine accepts user inputs defining a delivery location and is operative to connect the computer to an operating system installation source held on a remote computer, retrieve a copy of a master installation script held on the remote computer, and modify the copied master installation script in dependence on a number of variables associated with the delivery location to create a dedicated installation script, and subsequently installing automatically the computer operating system using the dedicated installation script.

To save the system administrator and computer workstation having to be at the physical location where the computer workstation is to be used, it is desirable that an operating system can be installed and configured elsewhere, such as at the equipment supplier's premises or at a centralised IT/support centre, the installation possibly being performed in a different language to that required by the end user and possibly without a network connection to the LAN and server where the computer workstation is to be used. It is furthermore desirable that a computer installed and configured at a first location for use at a second location will be configured exactly the same as a computer installed and configured at a third location for use at the second location.

The present invention provides an installation procedure in which the installation and configuration of each workstation is standardised and repeatable. The present invention also provides an installation procedure in which the installation process is essentially automated, thereby reducing the amount of time an installer must spend at each machine to provide a machine ready to be used upon delivery. Furthermore, the present invention provides an installation method and system where a computer operating system can be installed and configured at a first location for use at a second location, where the second location need not necessarily be on the same LAN or WAN as the first location.

Preferably, the installation routine is operative to retrieve the computer operating system from the remote computer and subsequently disconnect the computer from the remote computer, wherein the computer is then re-booted and the computer operating system installed using the dedicated installation script. The installation routine may also accept user inputs defining a build location corresponding to the location of the remote computer where the operating system installation source is held.

The remote computer may be connected to a network and the delivery location may be on the same network as the remote computer. Alternatively, the delivery location may be on a different network to the remote computer. The remote computer need riot necessarily be at the same physical location or on the same LAN as the computer being installed and configured provided that a data connection to the remote computer is possible. In this way, any suitable alternative remote computer may be used if the preferred remote computer is unavailable. The data connection to the remote computer may be made via the internet.

Preferably, the installation routine accepts a user input defining a unique identifier for the computer. More preferably, the unique identifier is used to register the computer with a network on which the computer is to be used. If a data connection to the delivery location is not possible, such as when the installation and configuration process is performed by an external contractor using their own build site, the registration may be postponed until the computer workstation is started after delivery.

Preferably, the installation routine is initiated by running a computer program held on a storage device.

Preferably, the storage device holds a database containing a number of delivery specific variables associated with a number of possible delivery locations, whereby the delivery specific variables are used to modify the master installation script. The database may also contain a number of build specific variables associated with a number of possible build locations which are used to connect the computer to a remote computer.

Preferably, the storage device stores a number of network drivers from which the user selects an appropriate driver to enable connection to the remote computer.

Preferably, the storage device is a computer disk. However, it may be any computer readable media capable of storing the aforementioned instructions.

According to a second aspect of the present invention, there is provided a system for installing a computer operating system comprising: a computer; a network to which the computer may be connected; a remote computer connected to the network which holds an operating system installation source and a master installation script file; and, a storage device which holds a set of computer executable instructions and a number of files for performing an installation routine in accordance with the first aspect of the present invention when run on the computer.

According to a third aspect of the present invention, there is provided a program storage device readable by a machine and encoding a program of instructions and a number of files for executing the method of the first aspect of the present invention.

Preferably, the machine is a general purpose computer.

### Brief Description of the Drawings

Examples of the present invention will now be described in detail with reference to the accompanying drawings, in which:
Figure 1 is a schematic of a typical computer hardware arrangement used in the remote installation of a computer operating system in accordance with the present invention;
Figure 2 is a flow chart which outlines a typical installation routine according to the present invention;
Figure 3 is a flow chart expanding upon a particular step of the installation routine illustrated in Figure 2;
Figure 4 is an expanded schematic of the hardware arrangement shown in Figure 1 including an end-use network where a workstation is to be used;
Figure 5 is a flow chart of a more specific example of an installation routine according to the present invention; and,
Figure 6 is a flow chart expanding upon a particular step of the installation routine illustrated in Figure 5.

### Detailed Description

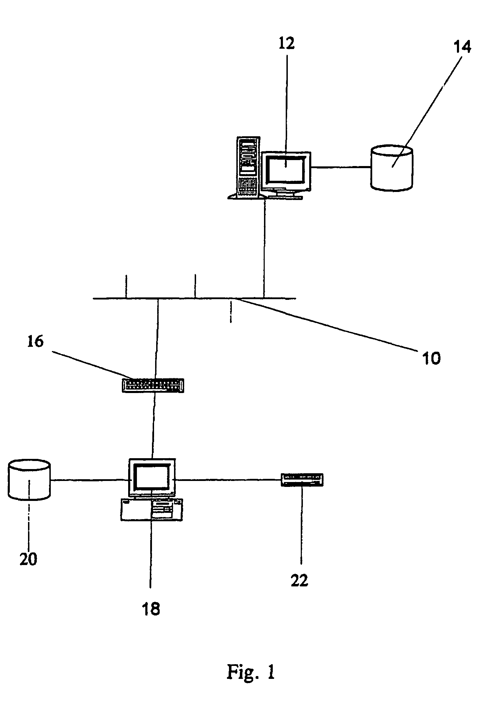

A typical arrangement of the computer hardware used in the remote installation of a computer operating system in accordance with the present invention is shown in Figure 1. A network 10 connects a network server 12 and a network data store 14 to a network interface device 16. The network interface device 16 is connected to a computer workstation 18 with a random access disk memory 20. For a brand-new machine the disk memory 20 does not contain a computer operating system.

In the present invention, a 3½ inch disk or other suitable storage device 22 is used to boot the computer workstation 18. During the boot, an installation program held on the computer storage device 22 is run on the computer workstation 18. As will be described in detail below, when running an installation routine controlled by the software the installer is prompted to identify the particular network interface device 16 and to input a build location code, a delivery location code and a unique identifier for the computer workstation 18. Subsequently, by using this data, the installation routine is able to connect the computer workstation 18 to the network 10 via the network interface device 16. The installation routine then automatically installs an appropriate computer operating system from a remote computer operating system installation source held in the network data store 14 onto the disk memory 20 of the computer workstation 18. As will be described below, the installation routine is adapted to configure the computer operating system in dependence on the delivery location code. The build location code refers to where the build process is to be carried out, whilst the delivery location code refers to where the built computer workstation is to be located.

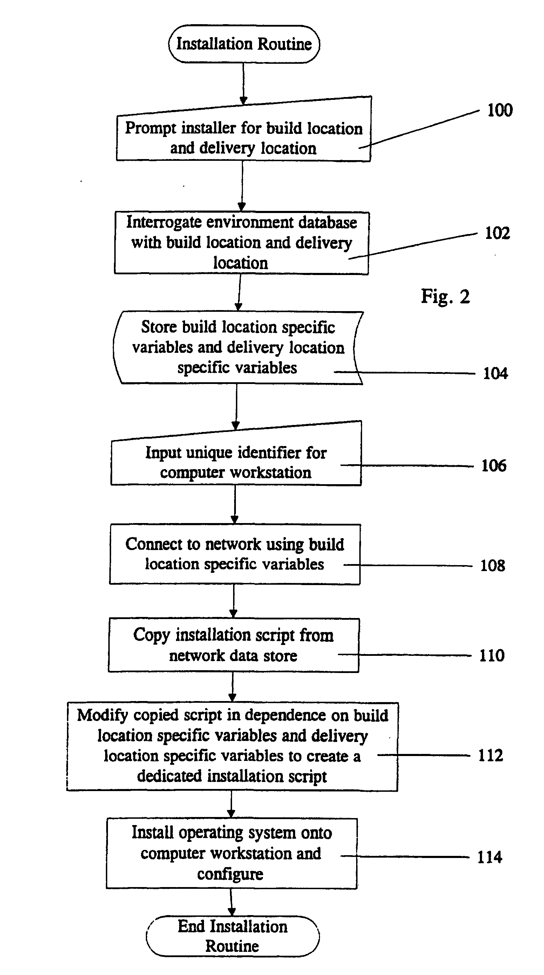

An overview of the installation routine will now be described with reference to the flow chart of Figure 2. As indicated, having inserted the installation disk and switched the computer workstation on, the installer is prompted to input a build location code and a delivery location code in step 100. An environment database in a look-up table stored on the installation disk is then interrogated with the build location code and the delivery location code (step 102) to obtain build location specific variables and delivery location specific variables which are stored by the computer workstation in step 104. The installer is also prompted to enter a unique identifier for the computer workstation (step 106). Using the build location specific variables the installation routine connects the computer workstation to the network in step 108 and accesses an installation account on the server. A master installation script held with the computer operating system installation source on the network data store is copied onto the disk memory of the computer workstation in step 110. The copy of the installation script is then modified in dependence on the build location specific variables and on the delivery location specific variables (step 112) to create a dedicated installation script. The computer operating system is then installed and configured using the computer operating system installation source setup routine with the dedicated installation script in step 114.

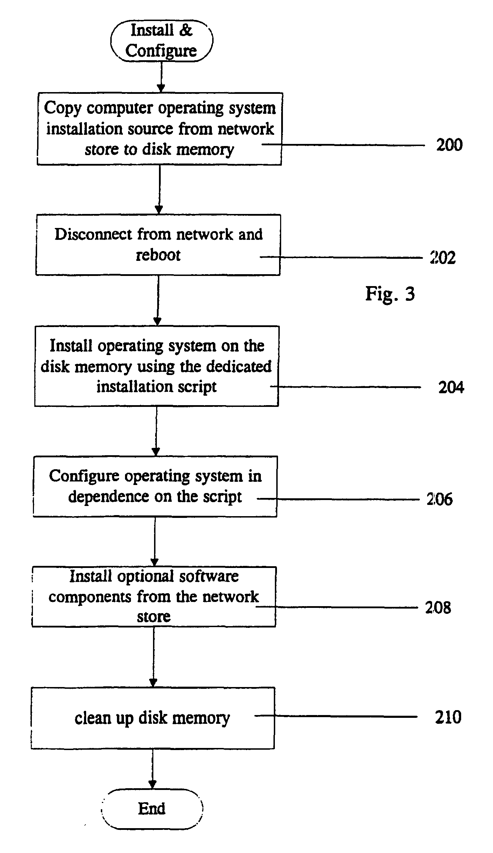

The installation and configuration step 114 of Figure 2 is expanded upon in the flow chart of Figure 3. As shown, the computer operating system installation source is copied from the network data store onto the disk memory (such as a hard disk) of the computer workstation in step 200. The setup routine then disconnects from the network and reboots the computer workstation in step 202. After the reboot of the computer workstation, the setup routine installs the computer operating system using the dedicated installation script (step 204). The computer operating system is then configured in dependence upon the dedicated installation script in step 206. Any additional software components such as e-mail and office application suites specified in the installation script are installed from the network data store at this time (step 208). The setup routine also cleans up the disk memory of the computer workstation by deleting any unnecessary files in step 210. The setup routine ends once the computer workstation has a complete computer operating system ready for use at the delivery location.

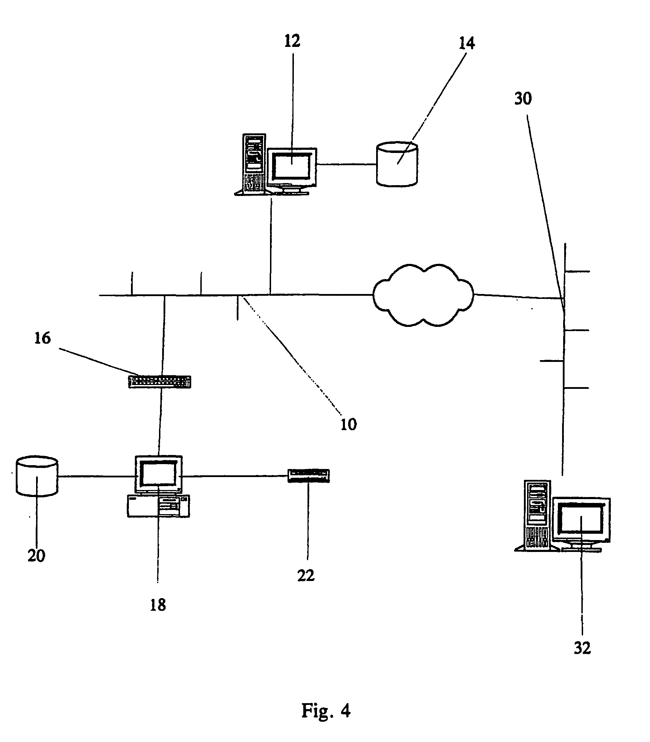

The schematic of Figure 4 includes the computer hardware arrangement of Figure 1 in addition to a network 30 and a network server 32 to which the computer workstation 18 is intended to be connected. The network 10 may be a part of the same LAN as the network 30, it may be a part of the same WAN as the network 30 connected by a telecommunications system, or there may be no network connection to the network 30. If there is a connection between the network 10 and the network 30 that the computer workstation 18 is intended to be used upon, then the installation routine registers the computer workstation 18 by its unique identifier with the network 30 and network server 32 where the computer workstation 18 is to be used. If there is no connection to the network 30 that the computer workstation 18 is intended to be used upon the registration is re-run when the computer is first started at the delivery location.

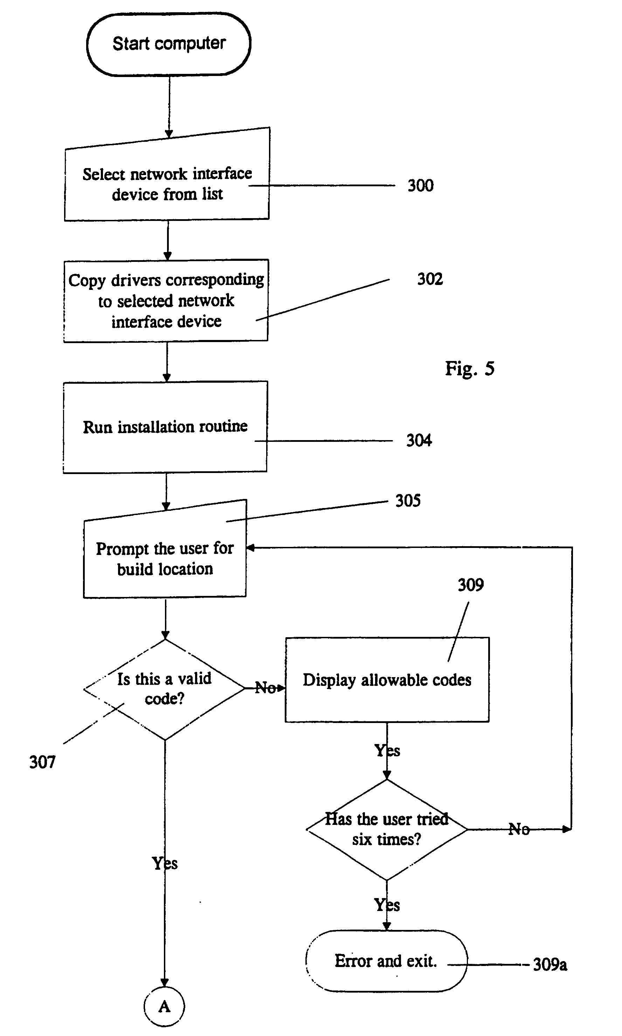

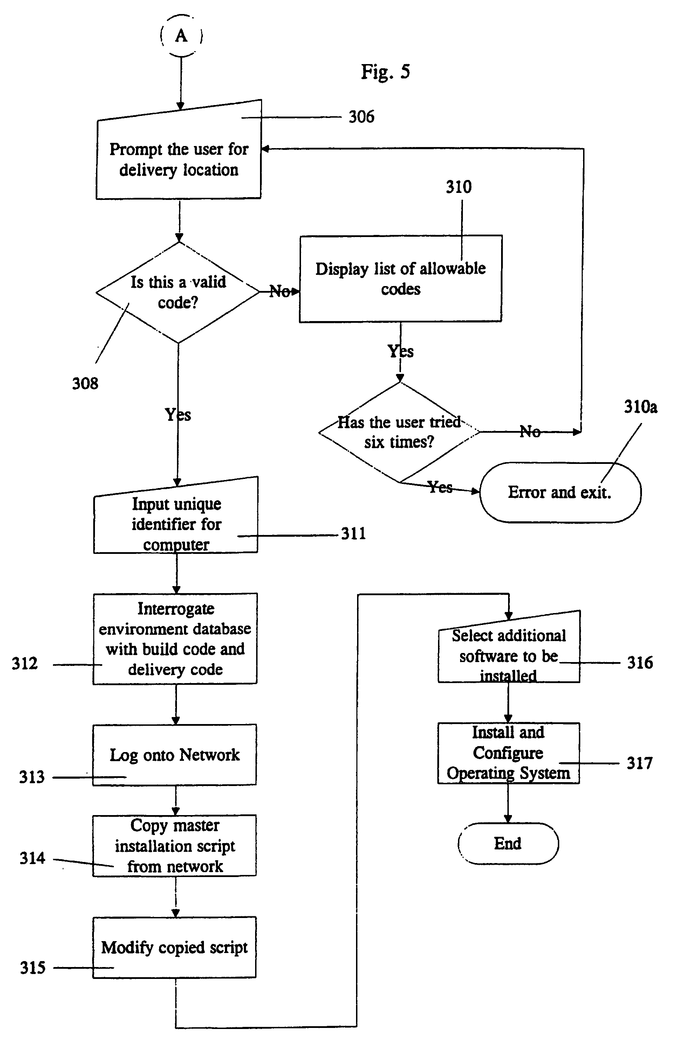

A more specific example of the present invention will now be described with reference to Figures 4 and 5. In this example, the network 10 is an ethernet network, with network servers 12, 32 operating under Microsoft Windows NT Server operating system V.4 and the computer operating system installation source is Microsoft Windows NT workstation. The computer storage device 22 is an MS-DOS formatted disk holding an MS-DOS v.6.22 operating system kernel and files necessary to boot the computer workstation 18, the installation routine, the environment database and TCP/IP network drivers for each selectable network interface device 16. The computer workstation 18 is a Hewlett-Packard Vectra XM/4 5/166 Personal Computer with 32MB of random access memory. The disk memory 20 of the computer workstation is a 1.2GB hard disk drive. The network interface device 16 is a 3COM Etherlink 2 3C503/16 ethernet network card installed in the computer workstation 18.

When the computer workstation 18 is booted with the computer storage device 22 inserted in the computer's disk drive, the operating system kernel on the computer storage device 22 takes control of the boot routine and prompts the user to select the network interface device 16 used from a list of supported network interface devices using the MS-DOS v.6.22 start-up menu facility in step 300. The TCP/IP network drivers corresponding to a network interface device selected from the list are copied to default file names (step 302) so that the install routine may access any of the supported network interface devices without knowledge of the specific type. The boot routine then runs the installation routine in step 304. The installation routine accepts an input of a build location code (step 305) and a delivery location code (step 306). The build location code and delivery location code are cross-referenced with a list of allowable locations in respective steps 307, 308 and if the locations are not on the list, a list of the allowable locations is displayed in respective steps 309, 310 and the installer is prompted to re-enter the code in respective steps 305, 306. If six incorrect attempts at entering an allowable location are made the installation routine ends and reports an error in respective steps 309a and 310a. After a valid build location code and a valid delivery location code are entered, the installation routine accepts an input of a unique identifier for the computer workstation (step 311) to be later used as its DNS address. The installation routine interrogates the environment database with the build location code and the delivery location code in step 312 to obtain build location specific variables and delivery location specific variables. The variables relate to environment and network specific settings for the two locations, as can be seen from Table 1.

**Table 1**

| Code | Location | Server | Share | File System | Keyboard Layout | Logon Domain | Join Domain | Timezone |
|---|---|---|---|---|---|---|---|---|
| CR | Crewe | UK_CRID | ID4 | NTFS | UK | UK_G | UK_C | GMT |
| GR | Greenford | UK_ID | ID4 | NTFS | UK | UK_G | UK_1 | GMT |
| REM | Remote Build Site | UKGW | ID4 | NTFS | UK | UK_REM | UK_REM | GMT |
| UK | GW UK at Stockley | UK_ID4 | ID4 | NTFS | UK | UK_G | UK_1 | GMT |
| UK_1 | GW UK Backup at Stockley | UKB_ID4 | ID4 | NTFS | UK | UKB_G | UKB_1 | GMT |
| US | US RTP Primary | US0001 | ID4 | NTFS | US | US1 | US_D | GMT-5 |

The build location specific variables "server" and "share" define the server and network data store holding the computer operating system installation source. If, for example, the build location UK is entered, the computer operating system installation source would be installed from ID4 on the UK_ID4 server.

Using these variables in combination with the TCP/IP drivers and the unique identifier, the installation routine logs the computer workstation onto the network in step 313. The IP address for the computer is obtained from the server using DHCP (dynamic host configuration protocol) and the unique identifier is used for the DNS address. A computer disk format utility is run to format the disk memory 20 of the computer workstation 18. A master installation script stored on the network data store with the computer operating system software source is copied onto the disk memory (step 314). An example of a master installation script is shown below:
[Unattended]
   OemPreinstall = yes
   OemSkipEula = yes
   NoWaitAfterTextMode = 1
   NoWaitAfterGUIMode = 1
   **FileSystem** =
   ExtendOEMPartition = 1,nowait
   ConfirmHardware = no
   NtUpgrade = no
   Win31 Upgrade = no
   TargetPath = WINNT
   OverwriteOemFilesOnUpgrade = no
   **KeyboardLayout** =
[GUIUnattended]
   **TimeZone** =
[OEM Ads]
   Banner = "Glaxo Wellcome, GIS ID4 v3.0 Installation. *Windows NT v4.0 Workstation." Background = gis.bmp
[UserData]
   FullName = "Glaxo Wellcome"
   OrgName = "Glaxo Wellcome"
   **ComputerName** =
[Display]
   ConfigureAtLogon = 0
   BitsPerPel = 8
   XResolution = 800
   YResolution = 600
   VRefresh = 60
   AutoConfirm = I
[Network]
   InstallProtocols = Glaxo_Protocol_List
   InstallInternetServer = Glaxo_Internet_List
   **JoinDomain** =
   **CreateComputerAccount** =
[Glaxo_Protocol_List]
   TC = TCPIP_Parameters
[TCPIP_Parameters]
   MCP=Yes
[Glaxo_Internet_List]
   InstallNETSTP = 0
   InstallMOSAIC = 0

The installation routine then modifies the copied script in dependence on the build location specific variables and on the delivery location specific variables (step 315) to create a dedicated installation script. In the above example, the script fields shown in bold are edited by inserting the delivery location specific variables, the field names corresponding to the column headings of Table 1. The unique identifier is entered as the ComputerName.

The installation routine then proceeds in step 316 to accept inputs relating to the selection of additional software to be installed. Such additional software may include drivers to access other network protocols, office application suites and e-mail client software. The installation routine ends by running the Windows NT set-up routine held with the computer operating system source on the network store. The Windows NT set-up routine is run in step 317 in an unattended installation mode using the dedicated installation script to provide answers to questions usually asked during a manual set-up. The set-up routine proceeds substantially as has been described with reference to Figure 3.

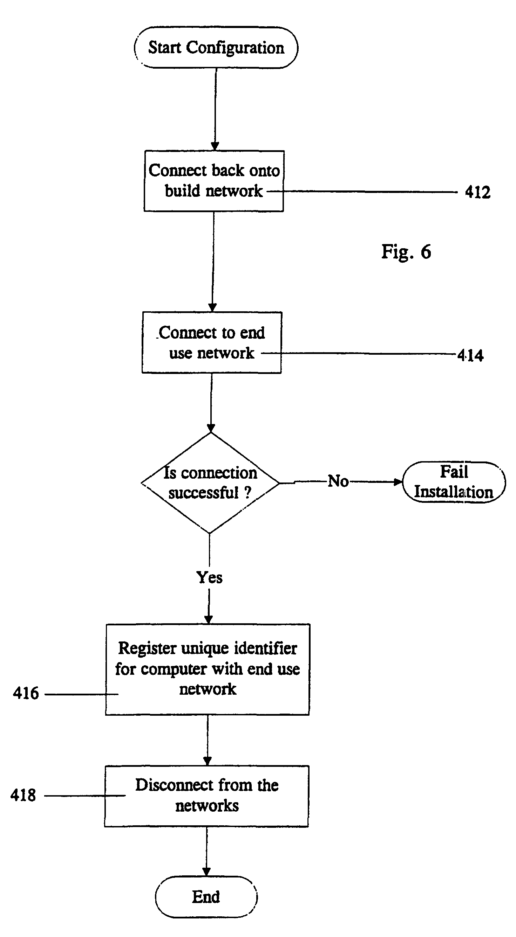

Windows NT requires that each computer workstation has its own DNS (Domain Name Service) address and that the address is registered with the network domain in which the computer workstation is to be used. With reference to the example of Figure 5, the configuration Step 206 of Figure 3 is expanded upon in the flow chart of Figure 6. Prior to the set-up routine ending, the routine reconnects the computer workstation to the network 10 using the newly installed computer operating system (step 412) and an attempt is made (step 414) to connect to the network where the computer workstation is intended to be used. If this is successful, the unique identifier for the computer is registered as the computer workstation's DNS address with the Windows NT network domain and server that the computer workstation is intended to be used upon in step 416. The computer workstation then disconnects from the networks (step 418) and is ready for use upon delivery to the location where it is intended to be used. If the attempt is not successful, the installation fails.

Where an outside organisation is contracted to supply and configure the computer workstation, a connection to the network where the computer workstation is intended to be used is not possible. To overcome this, a remote build site code relating to the outside organistaion's own network is used for the build location code (REM in Table 1). In step 315 of Figure 5, when the copied script is modified, the location specific variables relating to the remote build site code are used for both the build location specific variables and the delivery location specific variables. The delivery location code entered is stored for later use. When an attempt is made to connect to the computer workstation to the network domain and server upon which the computer workstation is intended to be used (step 414), the connection is actually made to the remote build site network permitting the set-up routine to complete. When the computer workstation is delivered by the outside organisation to the delivery location, the configuration of the computer operating system is updated in dependence on the stored delivery location code. The unique identifier of the computer workstation is then registered with the Windows NT network domain and server that the computer workstation is intended to be used upon at the delivery location according to the previously described steps 414 to 418 of Figure 6.

## Claims

1. A method of installing a computer operating system, comprising the steps of running an installation routine on a computer **characterised in that** the installation routine accepts user inputs defining a delivery location and is operative to connect the computer to an operating system installation source held on a remote computer, retrieve a copy of a master installation script held on the remote computer, and modify the copied master installation script in dependence on a number of variables associated with the delivery location to create a dedicated installation script, and subsequently installing automatically the computer operating system using the dedicated installation script.

2. A method according to claim 1, in which the installation routine is operative to retrieve the computer operating system from the remote computer and subsequently disconnect the computer from the remote computer, whereby the computer is then re-booted and the computer operating system installed using the dedicated installation script.

3. A method according to claim 1 or 2, in which the installation routine also accepts user inputs defining a build location corresponding to the location of the remote computer where the operating system installation source is held.

4. A method according to any preceding claim, in which the remote computer is connected to a network.

5. A method according to claim 4, in which the delivery location is on the same network as the remote computer.

6. A method according to claim 5, in which the delivery location is on a different network to the remote computer.

7. A method according to any preceding claim, in which the installation routine also accepts a user input defining a unique identifier for the computer.

8. A method according to claim 7, further comprising the step of registering the computer with a network using the unique identifier.

9. A method according to any preceding claim, in which the installation routine is initiated by running a computer program held on a storage device.

10. A method according to claim 9, in which the storage device is a computer disk which is inserted into a drive of the computer.

11. A method according to claim 9 or 10, in which the storage device holds a database containing a number of delivery specific variables associated with a number of possible delivery locations, whereby the delivery specific variables are used to modify the master installation script.

12. A method according to claim 11, in which the database contains a number of build specific variables associated with a number of possible build locations which are used to connect the computer to the remote computer.

13. A method according to any of claims 9 to 12, in which the storage device stores a number of network drivers from which the user selects an appropriate driver to enable connection to the remote computer.

14. A method according to any preceding claim, in which the computer connects to the remote computer by the internet.

15. A system for installing a computer operating system comprising:
a computer (18);
a network (10) to which the computer (18) may be connected;
a remote computer (12) connected to the network which holds an operating system installation source and a master installation script file; and,
a storage device (22) which holds a set of computer executable instructions and a number of files for performing an installation routine in accordance with the method of any preceding claim when run on the computer.

16. A system for installing a computer operating system according to claim 15, in which the storage device is a computer disk.

17. A computer program comprising computer program code means for peforming all the steps of any one of claims 1 to 14 when said program is run as a computer.

18. A computer program as claimed in claim 17 embodied on a computer readable medium.

## Patentansprüche

1. ein Verfahren, um ein Computerbetriebssystem zu installieren, das folgende Schritte umfasst: die Durchführung einer Installationsroutine auf einem Computer, die sich dadurch auszeichnet, dass die Installationsroutine Eingaben des Benutzers akzeptiert, die einen Zielort definieren, und dass sie in der Lage ist, den Computer mit einer Betriebssystem-Installationsquelle zu verbinden, welche sich auf einem weit entfernten Computer befindet, sich eine Kopie des Hauptinstallationsskripts, das sich auf dem weit entfernten Computer befindet, zu beschaffen, und das kopierte Hauptinstallationsskript, abhängig von einer Anzahl von Variablen, welche mit dem Zielort assoziiert sind, zu modifizieren, um so ein angepasstes Installationsskript zu kreieren, und im Anschluss daran, unter Verwendung des angepassten Installationsskripts, automatisch das Computerbetriebssystem zu installieren.

2. Ein Verfahren mit den Merkmalen aus Anspruch 1, in dem die Installationsroutine in der Lage ist, sich das Computerbetriebssystem von einem weit entfernten Computer zu beschaffen und anschließend die Verbindung zu dem weit entfernten Computer trennt, wobei der Computer dann neu gestartet wird, und das Computerbetriebssystem unter Verwendung des angepassten Installationsskripts installiert wird.

3. Ein Verfahren mit den Merkmalen aus den Ansprüchen 1 oder 2, indem die Installationsroutine auch Eingaben des Benutzers akzeptiert, die eine Aufbaulokalisation definieren, welche mit der Lokalisation des weit entfernten Computers, auf dem sich die Betriebssystem-Installationsquelle befindet, korrespondiert.

4. Ein Verfahren mit den Merkmalen aller vorausgegangenen Ansprüche, bei dem der weit entfernte Computer mit einem Netzwerk verbunden ist.

5. Ein Verfahren mit den Merkmalen aus Anspruch 4, in dem sich der Zielort im selben Netzwerk wie der weit entfernte Computer befindet.

6. Ein Verfahren mit den Merkmalen aus Anspruch 5, in dem sich der Zielort in einem anderen Netzwerk als der weit entfernte Computer befindet.

7. ein Verfahren mit den Merkmalen aller vorausgegangenen Ansprüche, in dem die Installationsroutine auch Eingaben des Benutzers akzeptiert, die eine eindeutige Identifizierung des Computers definieren.

8. Ein Verfahren mit den Merkmalen aus Anspruch 7, das außerdem den Schritt umfasst, bei dem der Computers unter Verwendung der eindeutigen Identifizierung in einem Netzwerk registriert wird.

9. Ein Verfahren mit den Merkmalen aller vorausgegangenen Ansprüche, in dem die Installationsroutine gestartet wird, indem ein Computerprogramm, das sich auf einem Speichermedium befindet, ausgeführt wird.

10. Ein Verfahren mit den Merkmalen aus Anspruch 9, in dem das Speichermedium eine Computerdiskette ist, die in ein Laufwerk des Computers eingelegt wird.

11. Ein Verfahren mit den Merkmalen aus Anspruch 9 oder 10, in dem das Speichermedium eine Datenbank besitzt, welche über eine Anzahl zielspezifischer Variablen verfügt, die mit einer Anzahl möglicher Zielorte assoziiert sind, wobei die zielspezifischen Variablen dazu verwendet werden, das Hauptinstallationsskript zu modifizieren.

12. Ein Verfahren mit den Merkmalen aus Anspruch 11, in dem die Datenbank über ein Anzahl aufbauspezifischer Variablen verfügt, die mit einer Anzahl möglicher Aufbaulokalisationen assoziiert sind, welche dazu verwendet werden, den Computer mit dem weit entfernten Computer zu verbinden.

13. Ein Verfahren mit den Merkmalen aus jedem der Ansprüche 9 bis 12, in dem das Speichermedium eine Anzahl Netzwerktreiber speichert, von denen der Benutzer einen geeigneten Treiber aussucht, um eine Verbindung mit dem weit entfernten Computer zu ermöglichen.

14. Ein Verfahren mit den Merkmalen aller vorausgegangenen Ansprüche, in dem der Computer durch das Internet mit dem weit entfernten Computer verbunden ist.

15. Ein System um ein Computerbetriebssystem zu installieren, das Folgendes umfasst: einen Computer (18);
ein Netzwerk (10), mit dem der Computer (18) verbunden sein kann;
ein weit entfernter Computer (12), der mit dem Netzwerk verbunden ist und auf dem sich eine Betriebssystem-Installationsquelle sowie eine Datei mit dem Hauptinstallationsskript befinden; und
ein Speichermedium (22), auf dem sich ein Satz vom Computer-ausführbarer Befehle und
eine Anzahl Dateien befinden, um damit in Übereinstimmung mit dem Verfahren aus jedem der vorrausgegangenen Ansprüche, eine Installationsroutine durchzuführen, wenn sie im Computer ausgeführt werden.

16. Ein System, mit den Merkmalen aus Anspruch 15, um ein Computerbetriebssystem zu installieren, in dem das Speichermedium eine Computerdiskette ist.

17. Ein Computerprogramm, das Computerprogrammcode beinhaltet, um alle Schritte aus jedem der Ansprüche 1 bis 14 durchzuführen, wenn das besagte Programm so ausgeführt wird, als wenn es ein Computer sei.

18. Ein Computerprogramm, wie es in Anspruch 17 beansprucht worden ist, das auf einem computerlesbaren Medium ausgeführt wird.

## Revendications

1. Procédé d'installation d'un système d'exploitation d'ordinateur, comprenant les étapes de lancement d'un programme d'installation sur un ordinateur, **caractérisé en ce que** le programme d'installation accepte des entrées d'utilisateur définissant une position de délivrance et est prévu pour connecter l'ordinateur à une source d'installation du système d'exploitation conservée sur un ordinateur à distance, d'extraction d'une copie d'un script d'installation principal conservé sur l'ordinateur à distance, et de modification du script d'installation principal copié selon un certain nombre de variables associées à la position de délivrance pour créer un script d'installation dédié, puis d'installation automatique du système d'exploitation d'ordinateur à l'aide du script d'installation dédié.

2. Procédé selon la revendication 1, selon lequel le programme d'installation est prévu pour extraire le système d'exploitation d'ordinateur à partir de l'ordinateur à distance puis pour déconnecter l'ordinateur de l'ordinateur à distance, l'ordinateur étant ainsi redémarré et le système d'exploitation d'ordinateur installé à l'aide du script d'installation dédié.

3. Procédé selon la revendication 1 ou 2, selon lequel le programme d'installation accepte, de même, des entrées d'utilisateur définissant une position d'établissement correspondant à la position de l'ordinateur à distance où la source d'installation du système d'exploitation est conservé.

4. Procédé selon l'une quelconque des revendications précédentes, selon lequel l'ordinateur à distance est connecté à un réseau.

5. Procédé selon la revendication 4, selon lequel la position de délivrance se trouve sur le même réseau que l'ordinateur à distance.

6. Procédé selon la revendication 5, selon lequel la position de délivrance se trouve sur un réseau différent de l'ordinateur à distance.

7. Procédé selon l'une quelconque des revendications précédentes, selon lequel le programme d'installation accepte, de même, une entrée d'utilisateur définissant un identificateur unique pour l'ordinateur.

8. Procédé selon la revendication 7, comprenant de plus une étape d'enregistrement de l'ordinateur avec un réseau utilisant l'identificateur unique.

9. Procédé selon l'une quelconque des revendications précédentes, selon lequel le programme d'installation est amorcé par lancement d'un programme informatique conservé dans un dispositif de stockage.

10. Procédé selon la revendication 9, selon lequel le dispositif de stockage est un disque informatique inséré dans un lecteur d'ordinateur.

11. Procédé selon la revendication 9 ou 10, selon lequel le dispositif de stockage conserve une base de données contenant un certain nombre de variables spécifiques de délivrance associées à un certain nombre de positions possibles de délivrance, les variables spécifiques de délivrance étant ainsi utilisées pour modifier le script d'installation principal.

12. Procédé selon la revendication 11, selon lequel la base de données contient un certain nombre de variables spécifiques d'élaboration associées à un certain nombre de positions possibles d'élaboration qui sont utilisées pour connecter l'ordinateur à l'ordinateur à distance.

13. Procédé selon l'une quelconque des revendications 9 à 12, selon lequel le dispositif de stockage stocke un certain nombre de logiciels pilotes de réseau à partir desquels l'utilisateur sélectionne un pilote adapté pour permettre une connexion avec l'ordinateur à distance.

14. Procédé selon l'une quelconque des revendications précédentes, selon lequel l'ordinateur se connecte à l'ordinateur principal par Internet.

15. Système pour l'installation d'un système d'exploitation d'ordinateur, comprenant :
- un ordinateur (18) ;
- un réseau (10) auquel peut être connecté l'ordinateur (18) ;
- un ordinateur à distance (12) connecté au réseau pour conserver une source d'installation de système d'exploitation et un fichier de script d'installation principal ; et
- un dispositif de stockage (22) conservant un ensemble d'instructions informatiques exécutables et un certain nombre de fichiers pour effectuer un programme d'installation selon le procédé selon l'une quelconque des revendications précédentes tournant sur l'ordinateur.

16. Système pour l'installation d'un système d'exploitation d'ordinateur selon la revendication 15, dans lequel le dispositif de stockage est un disque d'ordinateur.

17. Programme informatique comprenant un moyen de code de programme informatique pour effectuer toutes les étapes selon l'une quelconque des revendications 1 à 14, lorsque ledit programme est lancé comme un ordinateur.

18. Programme informatique selon la revendication 17, incorporé à un support. lisible sur ordinateur.
